(19) Europäisches Patentamt
European Patent Office
Office européen des brevets

(11) EP 1 918 244 A1

(12) **EUROPEAN PATENT APPLICATION**

(43) Date of publication:
07.05.2008 Bulletin 2008/19

(51) Int Cl.:
B81B 3/00 (2006.01)     G02B 26/08 (2006.01)

(21) Application number: 07020526.5

(22) Date of filing: 19.10.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK RS

(30) Priority: 06.11.2006 JP 2006299980

(71) Applicant: Sony Corporation
Minato-ku
Tokyo 108-0075 (JP)

(72) Inventor: Nagara, Toru
Tokyo, 108-0075 (JP)

(74) Representative: Müller - Hoffmann & Partner
Patentanwälte,
Innere Wiener Strasse 17
81667 München (DE)

(54) **MEMS actuation device**

(57)     An actuation device having a wide operating range is provided. An actuation device includes: a movable section (10) arranged so as to be swingable about a shaft; a pair of beam sections (20) arranged on the shaft, and connected to both sides of the movable section, respectively; a swinging electrode (50) connected at least one of the movable section and the beam sections; and a fixed electrode (40) arranged so as to be positioned in the same plane as the swinging electrode when the movable section is in a neutral position, wherein each of the beam sections satisfies the following formula:

$$\alpha_3 > a_e/50$$

where $\alpha_3$ represents the third spring constant of the beam section, and $a_e$ represents a maximum value of an excitation force generated in the swinging electrode when a capacitance between the swinging electrode and the fixed electrode is changed according to the swing angle of the movable section.

FIG. 1

EP 1 918 244 A1

**Description**

CROSS REFERENCES TO RELATED APPLICATIONS

The present invention contains subject matter related to Japanese Patent Application JP 2006-299980 filed in the Japanese Patent Office on November 6, 2006, the entire contents of which being incorporated herein by reference.

BACKGROUND OF THE INVENTION

1. Field of the Invention

The present invention relates to an actuation device supplying a swing actuation force to a movable section by an electrostatic force, thereby to scan an optical signal, for example, for image displaying.

2. Description of the Related Art

A method of displaying an image by scanning light by a two-dimensional mirror mounted in a MEMS (Micro Electro Mechanical Systems) device has been proposed in the past. For example, the two-dimensional mirror is supported by two beam sections arranged on the same straight line, and the two-dimensional mirror is electrostatically actuated by an electrostatic actuator in which a comb-shaped swinging electrode arranged in an end portion in a direction orthogonal to a extending direction of two beam sections of the two-dimensional mirror and a comb-shaped fixed electrode arranged in an outer frame portion of the two-dimensional mirror are arranged in parallel on the same plane so as to engage each other (refer to Japanese Unexamined Patent Application Publication Nos. 2005-308820 and 2005-173159).

SUMMARY OF THE INVENTION

In the above-described comb-shaped electrostatic actuator, an AC voltage having a larger frequency than the resonant frequency of a two-dimensional mirror determined by the inertia of the two-dimensional mirror and the spring constants of two beam sections is applied, and after that, when the frequency of the AC voltage is gradually reduced to reach the above-described resonant frequency, the two-dimensional mirror starts swinging, and when the frequency is further reduced, the amplitude of the two-dimensional mirror increases accordingly. In other words, an electrostatic actuator in a related art actuates the two-dimensional mirror in a so-called sweep-down mode.
However, in the sweep-down mode, an operating range capable of actuating the two-dimensional mirror is narrow and limited; therefore, for example, it is not easy to design the two-dimensional mirror and beams so that a scanning frequency and an amplitude which are necessary to display an image fall within the operating range.
In view of the foregoing, it is desirable to provide an actuation device with a wide operating range.
According to an embodiment of the invention, there is provided an actuation device including: a movable section arranged so as to be swingable about a shaft; a pair of beam sections arranged on the shaft, and connected to both sides of the movable section, respectively; a swinging electrode connected at least one of the movable section and the beam sections; and a fixed electrode arranged so as to be positioned in the same plane as the swinging electrode when the movable section is in a neutral position, wherein each of the beam sections satisfies the following formula:

$$\alpha_3 > a_e/50$$

where $\alpha_3$ represents the third spring constant of the beam section, and $a_e$ represents a maximum value of an excitation force generated in the swinging electrode when a capacitance between the swinging electrode and the fixed electrode is changed according to the swing angle of the movable section.
In the actuation device according to the embodiment, the movable section is swingably supported by a pair of beam sections having a third spring constant $\alpha_3$ larger than $a_e/50$ and having nonlinearity, and the fixed electrode is arranged so as to be positioned in the same plane as the swinging electrode when the movable section is in a neutral position. Thereby, when an AC voltage having a frequency equal and close to twice the resonant frequency of the movable section is applied between the swinging electrode and the fixed electrode, the movable section is slightly inclined from the beam sections as central shafts, and a swinging-direction component of an electrostatic attractive force is slightly generated, and parametric excitation causes the swing of the movable section. When the movable section is activated in such a manner, and the amplitude (a swing angle) starts increasing, the displacement of capacitance between the swinging electrode and the fixed electrode increases, and an electrostatic force is generated in a swinging direction according to the magnitude of the displacement. At this time, the electrostatic force in the swinging direction is periodically generated in the swinging electrode at a cycle of 1/2 of the swing of the movable section, so forced vibrations cause the swing of the movable section. Next, when the displacement of capacitance is reduced according to an increase in the amplitude (swing angle) of the movable section, and the electrostatic force in the swinging direction is asymptotic to a uniform magnitude, the behavior of parametric excitation is displayed.

Moreover, the movable section is supported by a pair of beam sections having a third spring constant $\alpha_3$ larger than $a_e/50$ and having nonlinearity, so a frequency corresponding to the stability limit of swing of the movable section is higher than the minimum frequency capable of activating the movable section (a frequency equal and close to twice the resonant frequency of the movable section). Moreover, the change amount of the amplitude of the movable section relative to the frequency of an AC voltage applied between the swinging electrode and the fixed electrode is decreased, compared to the case where the movable section is swingably supported by a pair of beam sections having linearity.

In the actuation device according to the embodiment of the invention, the movable section is swingably supported by a pair of beam sections having a third spring constant $\alpha_3$ larger than $a_e/50$ and having nonlinearity, and the fixed electrode is arranged so as to be positioned in the same plane as the swinging electrode when the movable section is in a neutral position, so a frequency corresponding to the stability limit of swing of the movable section can be higher than the minimum frequency capable of activating the movable section (a frequency equal and close to twice the resonant frequency of the movable section). Thereby, an AC voltage having a smaller frequency than the minimum frequency capable of activating the movable section is applied, and after that, when the frequency of the AC voltage is gradually increased to reach the minimum frequency capable of activating the movable section, the movable section is activated, and starts swinging, and the frequency can be further increased so as to increase the amplitude of the movable section. In other words, the movable section can be actuated in a sweep up mode.

Moreover, compared to the case where the movable section is swingably supported by a pair of beam sections having linearity, an operating range from the minimum frequency capable of activating the movable section to a frequency corresponding to the stability limit of swing of the movable section can be extremely wide. Thereby, when the movable section is actuated in a sweep up mode, the operating range can be wider.

Other and further objects, features and advantages of the invention will appear more fully from the following description.

BRIEF DESCRIPTION OF THE DRAWINGS

FIG. 1 is a plan view of an actuation device according to an embodiment of the invention;

FIG. 2 is a sectional view of the actuation device taken along a line A-A of FIG. 1 viewed from an arrow direction;

FIG. 3 is a sectional view for describing an electrostatic force generated in a swinging electrode;

FIG. 4 is a diagram for describing a relationship between the frequency of an AC voltage and the amplitude of a movable section;

FIG. 5 is a diagram for describing a relationship between capacitance, a swing angle and an electrostatic force;

FIG. 6 is a diagram for describing a relationship between the amplitude of a movable section and an electrostatic force;

FIG. 7 is a plot showing amplitude characteristics and phase characteristics of an actuation device according to a comparative example;

FIG. 8 is a plot showing amplitude characteristics and phase characteristics of an actuation device according to another comparative example;

FIG. 9 is a plot showing amplitude characteristics and phase characteristics of an actuation device according to an example;

FIG. 10 is a plot showing amplitude characteristics and phase characteristics of an actuation device according to the comparative example;

FIG. 11 is a plot showing amplitude characteristics and phase characteristics of an actuation device according to another comparative example; and

FIG. 12 is a plot showing amplitude characteristics and phase characteristics of an actuation device according to the example.

DETAILED DESCRIPTION OF THE PREFERRED EMBODIMENTS

A preferred embodiment will be described in detail below referring to the accompanying drawings.

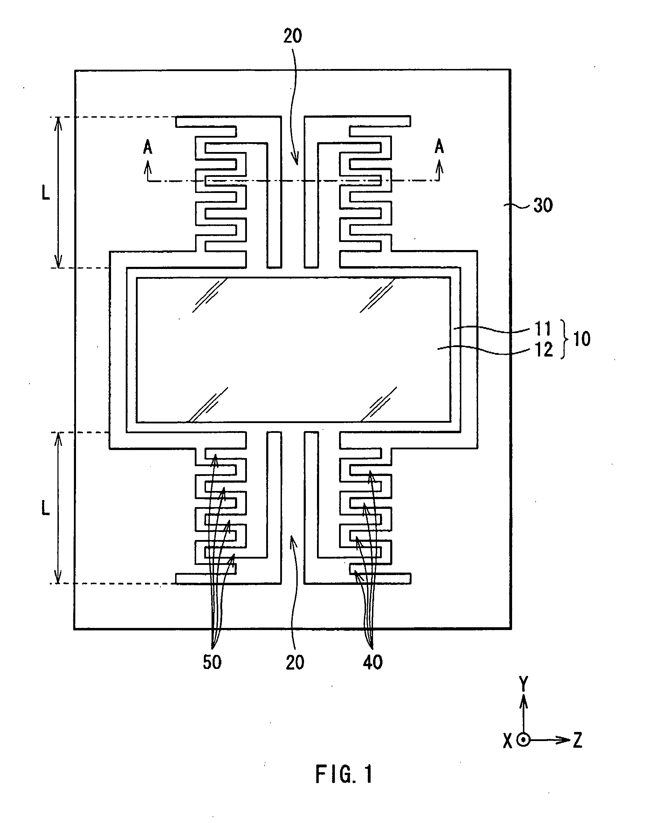

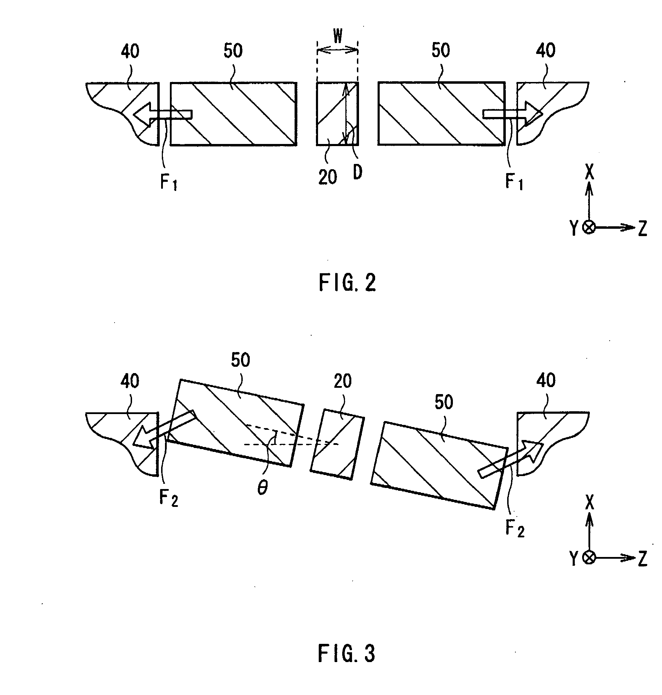

FIG. 1 shows a plan view of an actuation device according to an embodiment of the invention, and FIG. 2 shows a sectional view taken along a line A-A of FIG. 1 viewed from an arrow direction. The actuation device is used in, for example, an image display or a scanner to reflect and scan an optical signal, and in the actuation device, for example, a rectangular movable section 10 is connected to an outer frame section 30 through beam sections 20 on two facing sides (in this case, long sides).

A plurality of fixed electrodes 40 are connected to the outer frame section 30, and a plurality of swinging electrodes 50 are connected to the movable section 10 in positions corresponding to the fixed electrodes 40, and the plurality of fixed electrodes 40 and the plurality of swinging electrodes 50 constitute an electrostatic actuator. Moreover, the actuation device includes a power source for actuation (not shown) for applying a voltage for electrostatic actuation to the electrostatic actuator (between the swinging electrodes 50 and the fixed electrodes 40).

The movable section 10 is, for example, a two-dimensional mirror in which a reflective film 12 is arranged on a surface of a rectangular supporting base 11, and as shown in FIG. 3, for example, according to an image signal, the movable section 10 swings about a shaft (the beam sections 20) to change the reflection direction of light. In this case, "swing" means to rotate in one direction from a neutral position up to a predetermined angle, and then rotate in the opposite direction to return to the neutral position, and further rotate in the opposite direction up to a predetermined angle, and the meaning of "swing" includes the case of rotating in one direction from the neutral position up to a predetermined angle, and then rotating in the opposite direction to return and stop at the neutral position.

The beam sections 20 are torsion beams as shafts about which the movable section 10 swings, and the beam sections 20 support the movable section 10 so that the movable section 10 can swing from side to side up to a certain angle. The beam sections 20 each have a configuration in which a primary spring constant k increases, more specifically a configuration satisfying the following two formulas. When the primary spring constant k increases, the resonant frequency of the movable section 10 determined by the inertia of the movable section 10 and the spring constants of two beam sections 20 can be increased. Therefore, for example, in the case where a necessary scanning frequency for displaying an image is large, it is preferable to increase the primary spring constant k (for example, larger than $9.15 \times 10^{-6}$ Nm).

$$W/D \leqq 1.3$$

In the above formula, W represents the width of the beam section 20, and D represents the thickness of the beam section 20.

The beam sections 20 each also have nonlinearity with a large third spring constant $\alpha_3$ and a large fifth spring constant $\alpha_5$. The third spring constant $\alpha_3$ satisfies the following formula.

$$\alpha_3 > a_e/50$$

In the above formula, $a_e$ represents a maximum value of an excitation force generated in the swinging electrodes 50 when the capacitance of the electrostatic actuator is changed according to the swing angle $\theta$ of the movable section 10.

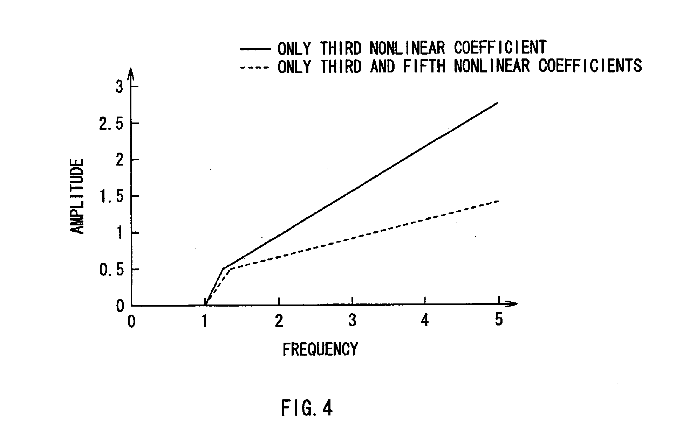

The third spring constant $\alpha_3$ preferably satisfies the following formula in a relationship with the fifth spring constant $\alpha_5$. As shown in FIG. 4, when the fifth spring constant $\alpha_5$ increases, the change amount of the amplitude (swing angle) of the movable section 10 relative to the frequency of an AC voltage applied from the power source for actuation is decreased, so it is not easy to keep a suitable amplitude in a range ($a_5 > 2\alpha_3$) in which the fifth spring constant $\alpha_5$ is dominant. In addition, the values of a horizontal axis and a vertical axis in FIG. 4 are normalized, and the values do not mean much.

$$a_5 \leqq 2\alpha_3$$

The outer frame section 30 supports the movable section 10 and the swinging electrodes 50 through the beam sections 20 in midair, and fixes the fixed electrodes 40 in predetermined positions, and, for example, the outer frame section 30 is arranged so as to surround the movable section 10.

The fixed electrodes 40 are formed so as to be connected to the outer frame section 30, and each have a comb shape. The fixed electrodes 40 are arranged so as to extend in a direction orthogonal to the extending direction of the beam sections 20 (the shafts about which the movable section 10 swings).

On the other hand, the swinging electrodes 50 are formed on both sides of two beam sections 20 so as to be connected to the movable section 10, and each have a comb shape. The swinging electrodes 50 are arranged so as to extend in a direction orthogonal to the extending direction of the beam sections 20 (the shafts about which the movable section 10 swings), and the swinging electrodes 50 engage the fixed electrodes 40. The fixed electrodes 40 and the swinging electrodes 50 are insulated and separated from each other, although it is not shown in FIG. 1.

As shown in FIG. 2, when the movable section 10 is in the neutral position, the swinging electrodes 50 are arranged on the same plane as the fixed electrodes 40, and a difference in level between the swinging electrodes 50 and the fixed electrodes 40 does not occur. Thereby, in the actuation device, in the case where the movable section 10 is in the neutral position, when a voltage for electrostatic actuation is applied to the electrostatic actuator, an electrostatic force $F_1$ is generated in a direction parallel to a plane including the swinging electrodes 50 and the fixed electrodes 40 (a YZ plane direction in FIG. 2).

At this time, a voltage for electrostatic actuation applied to the electrostatic actuator is an AC voltage having a frequency equal and close to the resonant frequency of the movable section 10, and the electrostatic force $F_1$ is generated in the YZ plane direction in FIG. 2 in the same cycle as that of the AC voltage. Then, in the case where the magnitude of the electrostatic force $F_1$ is large, the activation frequency of the movable section 10 becomes high, and in the case where the amplitude of the electrostatic force $F_1$ is small, the activation frequency of the movable section 10 becomes low. Therefore, in the case where it is desired to reduce the activation frequency of the movable section 10, it is preferable to reduce the numbers of the fixed electrodes 40 and the swinging electrodes 50, and widen gaps between the fixed electrodes 40 and the swinging electrodes 50 so that the movable 10 is activated even with a small magnitude of the electrostatic force $F_1$, and in the case where it is desired to increase the activation frequency of the movable section 10, it is preferable to increase the number of comb teeth in each of the fixed electrodes 40 and the swinging electrodes 50, and narrow gaps between the fixed electrodes 40 and the swinging electrodes 50 so that the movable section 10 is activated with a large magnitude of the electrostatic force $F_1$.

Moreover, as shown in FIG. 3, in the case where the movable section 10 and the swinging electrodes 50 are inclined from the beam sections 20 as central shafts, when a voltage for electrostatic actuation is applied to the electrostatic actuator, an electrostatic force $F_2$ is generated in a direction which is the swinging direction (an X direction in FIG. 3) of the movable section 10 and a direction in which the movable section 10 and the swinging electrodes 50 are drawn back to the neutral position.

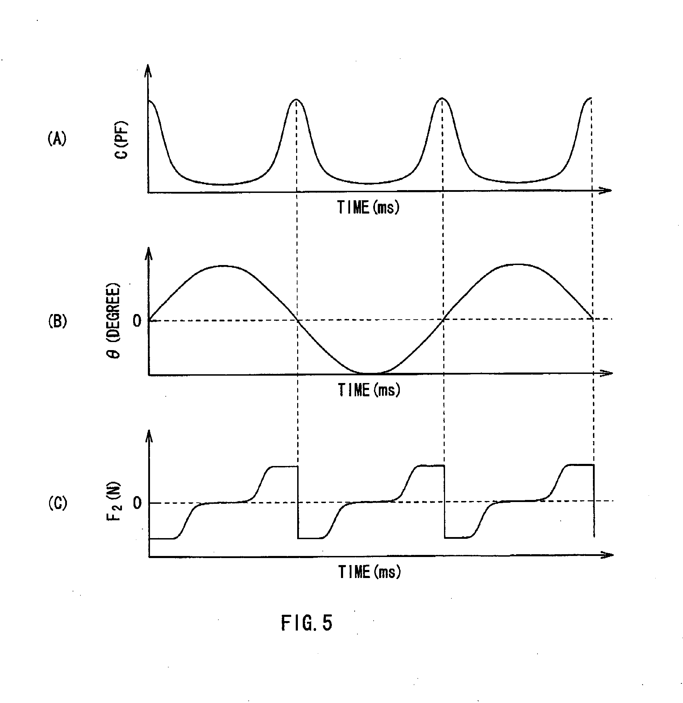

The electrostatic force $F_2$ is a function of the capacitance C of the electrostatic actuator, so as shown in FIG. 5(A) to (C), when the capacitance C of the electrostatic actuator is displaced at a frequency twice as high as a frequency at which the swing angle $\theta$ of the movable section 10 and the swinging electrodes 50 is displaced, the electrostatic force $F_2$ is also displaced at a frequency twice as high as the frequency at which the swing angle $\theta$ is displaced. At this time, in the case where the swing angle $\theta$ is near zero, the ratio of the displacement of the capacitance C to the swing angle $\theta$ is substantially uniform, so the magnitude of the electrostatic force $F_2$ in the case where the swing angle $\theta$ is near zero is also substantially uniform. Therefore, when a voltage for electrostatic actuation is applied to the electrostatic actuator in the case where the movable section 10 and the swinging electrodes 50 are inclined from the beam sections 20 as central shafts, a substantially uniform magnitude of the electrostatic force $F_2$ is applied to the movable section 10 at a cycle of 1/2 of the displacement of the swing angle $\theta$, and forced vibrations cause the swing of the movable section 10.

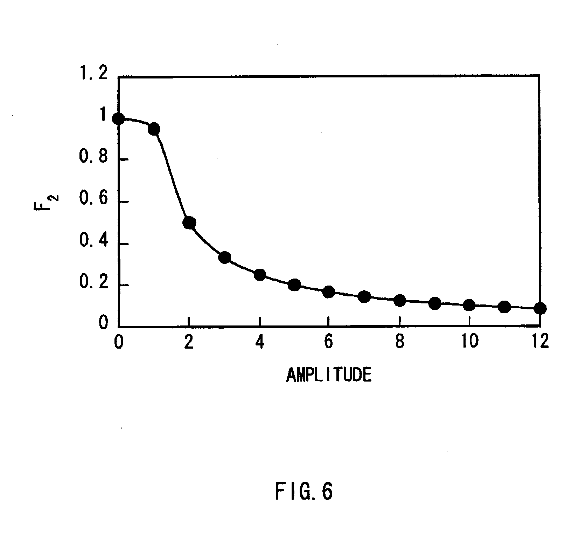

As shown in FIG. 5(A) to (C) and FIG. 6, when the displacement of capacitance is reduced according to an increase in the amplitude of the movable section 10, and the electrostatic force $F_2$ in the swinging direction is asymptotic to a uniform magnitude, the behavior of parametric excitation is displayed. Thus, the movable section 10 can swing by organically combining three behaviors.

The power source for actuation generates an alternating potential difference for activation and high-speed actuation of the movable section 10, and the waveform of the potential difference may be a rectangular waveform or a pulse waveform. The power source for actuation can output an AC voltage with a frequency ranging from a frequency equal or close to twice the resonant frequency of the movable section 10 to a frequency corresponding to a stability limit both inclusive.

In the actuation device with such a configuration, at the time of activation, that is, when the movable section 10 is in the neutral position, an AC voltage having a frequency equal and close to twice the resonant frequency of the movable section 10 is applied to the electrostatic actuator. Then, the electrostatic force $F_1$ is generated in a direction (an X direction in FIG. 2) parallel to a plane including the swinging electrodes 50 and the fixed electrodes 40, so when the movable section 10 is slightly inclined from the beam sections 20 as the central shafts at this time, a swinging-direction component of the electrostatic force $F_1$ is slightly generated, and parametric excitation causes the swing of the movable section 10. When the movable section 10 is activated in such a manner, and the amplitude starts increasing, the displacement of the capacitance of the electrostatic actuator is increased, and the electrostatic force $F_2$ is generated in a swinging direction according to the magnitude of the displacement. At this time, the electrostatic force $F_2$ in the swinging direction is periodically generated in the swinging electrodes 50 at a cycle of 1/2 of the swing of the movable section 10, so forced vibrations cause the swing of the movable section 10. Next, when the displacement of the capacitance is reduced according to an increase in the amplitude of the movable section 10, and the electrostatic force in the swinging direction is asymptotic to a uniform magnitude, the behavior of parametric excitation is displayed.

However, the first two swings in a series of swings to reach the maximum amplitude are actually degenerated.

Therefore, when the electrostatic force $F_2$ in the swinging direction is asymptotic to a uniform magnitude, and an AC voltage having a frequency within a range capable of swinging the movable section 10 by the electrostatic force $F_2$ is applied to the electrostatic actuator, the movable section 10 can be activated immediately at a desired frequency and a desired amplitude. Therefore, it is suitable for automatic control.

In an actuation device in a related art, a movable section is swingably supported by a pair of beam sections having a third spring constant $\alpha_3$ smaller than $a_e/500$ and having linearity, so a frequency corresponding to the stability limit of swing of the movable section is lower than the resonant frequency of the movable section. Therefore, unless before activating the actuation device, an actuator operates in a sweep down mode in which an AC voltage having a larger frequency than the resonant frequency of the movable section is applied to the actuator and then the frequency of the AC voltage is gradually reduced, it is difficult to activate the movable section.

However, in the embodiment, and the movable section 10 is swingably supported by a pair of beam sections 20 having a third spring constant $\alpha_3$ larger than $a_e/50$ and having nonlinearity, so the frequency corresponding to the stability limit of the swing of the movable section 10 is higher than the minimum frequency capable of activating the actuation device (a frequency equal and close to twice the resonant frequency of the movable section). Therefore, when the actuator operates in a sweep up mode in which the frequency of an AC voltage applied to the electrostatic actuator is gradually increased, the movable section 10 can be activated.

Moreover, the spring constant $a_3$ of the beam sections 20 is larger than $a_e/50$, so the operating range from the minimum frequency capable of activating the movable section 10 to a frequency corresponding to the stability limit of the swing of the movable section 10 can be wider than that in the case where the movable section is swingably supported by a pair of beam sections having linearity. In particular, in the case where the beam sections 20 are formed so that the fifth spring constant $\alpha_5$ is equal to or smaller than twice the third spring constant $\alpha_3$, the operating range can be extremely large. Therefore, for example, the movable section 10 and the beam sections 20 can be easily designed so that a necessary scanning frequency and a necessary amplitude for displaying an image falls within the operating range.

Moreover, in the embodiment, the operating range can fall within a larger frequency band than the minimum frequency capable of activating the actuation device, so compared to the actuation device in the related art, the swing frequency of the movable section 10 can be easily increased. Thereby, for example, even if a necessary scanning frequency for displaying an image is high, the movable section 10 and the beam sections 20 can be easily designed so that the scanning frequency falls within the operating range.

Next, the behaviors of the movable section 10 will be described in detail with motion equations.

When a force Fx is applied so as to move an object with a weight m by a displacement x, the motion equation of the object is given by Mathematical Formula 1. When both sides of the equation are divided by the weight m to normalize, Mathematical Formula 2 is obtained. In this case, assuming that the force Fx is directly proportional to the displacement x, Mathematical Formula 3 can be obtained. Moreover, with consideration given to attenuation directly proportional to speed, Mathematical Formula 4 is obtained. In the formulas, k represents a spring constant, and $\gamma$ represents an attenuation coefficient.

## Mathematical Formula 1

$$m\ddot{x} = F_x$$

## Mathematical Formula 2

$$\ddot{x} = \frac{F_x}{m}$$

## Mathematical Formula 3

$$\ddot{x} = -kx$$

## Mathematical Formula 4

$$\ddot{x} + 2\gamma\dot{x} + kx = 0$$

When an external force ($a_e\cos(vt)$) is applied to the object with the weight m at a frequency, the motion equation of the object is given by Mathematical Formula 5. In the formula, $a_e$ represents an excitation force, v represents an excitation frequency, and t represents time. At this time, assuming that the external force Fx is not simply directly proportional to the displacement x, and includes a component directly proportional to the third power of the displacement x, the motion equation is given by Mathematical Formula 6.

## Mathematical Formula 5

$$\ddot{x} + 2\gamma\dot{x} + kx = a_e\cos v\,t$$

## Mathematical Formula 6

$$\ddot{x} + 2\gamma\dot{x} + kx + \alpha_3 x^3 = a_e\cos v\,t$$

The actuation device according to the embodiment uses an electrostatic actuator, so it is apparent that a force in an X-axis direction applied to the movable section 10 is typically an attractive force. Moreover, the force typically works in a direction in which the movable section 10 is drawn back to the neutral position. Therefore, when the force represents the product of cos(vt) and the displacement x, and an offset is added to cos(vt), a motion equation represented by Mathematical Formula 7 can be obtained. Mathematical Formula 7 is analyzed by a nonlinear analytical technique as below.

## Mathematical Formula 7

$$\ddot{x} + 2\gamma\dot{x} + (1 + a_e(1 + \cos v\,t))x + \alpha_3 x^3 = 0$$

In this case, coefficient excitation occurs when an excitation frequency v reaches around twice a natural frequency, so the excitation frequency v can be represented by Mathematical Formula 8. In the formula, σ represents the vibration frequency of the movable section 10. At this time, when the displacement x is represented by Mathematical Formula 9, and Mathematical Formulas 8 and 9 are substituted into Mathematical Formula 7, Mathematical Formula 7 can be changed into Mathematical Formulas 10 and 11. In the formulas, a represents a steady amplitude.

## Mathematical Formula 8

$$v = 2 + \sigma = 2 + \varepsilon\,\hat{\sigma}$$

## Mathematical Formula 9

$$x = \frac{1}{2}\,a\,e^{-i\phi}$$

## Mathematical Formula 10

$$\left| \frac{da}{dt} = -\gamma a - \frac{1}{4} a_e a \sin 2\phi \right|$$

## Mathematical Formula 11

$$a\frac{d\phi}{dt} = \frac{1}{2}\sigma a - \frac{1}{2}a_e a - \frac{1}{4}a_e a\cos 2\phi - \frac{3}{8}\alpha_3 a^3$$

In a steady state, the left side of each of Mathematical Formulas 10 and 11 is zero, so Mathematical Formulas 10 and 11 can be changed into Mathematical Formula 12. When the formula is further changed, it is found out that the movable section 10 vibrates at a frequency σ shown in Mathematical Formula 13.

## Mathematical Formula 12

$$\left| \left(\frac{4\gamma}{a_e}\right)^2 + \left(\frac{4}{a_e}\right)^2 \left(\frac{1}{2}\sigma - \frac{1}{2}a_e - \frac{3}{8}\alpha_3 a^2\right)^2 = 1 \right|$$

## Mathematical Formula 13

$$\sigma = \frac{3}{4}\alpha_3 a^2 + a_e \pm\sqrt{\frac{a_e^2}{4} - 4\gamma^2}$$

The stability of the vibrations of the movable section 10 can be obtained by calculating an eigenvalue of the Jacobian matrix of Mathematical Formula 14 from Mathematical Formulas 10 and 11. Thereby, it is found out that a stability condition may satisfy Mathematical Formula 15. Therefore, a stable solution of an equation in Mathematical Formula 13 is only Mathematical Formula 16.

## Mathematical Formula 14

$$J = \begin{bmatrix} -\gamma - \frac{1}{4}a_e\sin 2\phi & -\frac{1}{2}a_e\cos 2\phi \\ \frac{1}{a}\left(\frac{1}{2}\sigma - \frac{1}{2}a_e - \frac{1}{4}a_e\cos 2\phi - \frac{9}{8}\alpha_3 a^2\right) & \frac{1}{2}a_e\sin 2\phi \end{bmatrix}$$

## Mathematical Formula 15

$$\sigma \; < \; a_e \; + \; \frac{3}{4} \; \alpha_3 a^2$$

## Mathematical Formula 16

$$\sigma \; = \; \frac{3}{4} \; \alpha_3 a^2 \; + \; a_e \; - \sqrt{\frac{a_e^2}{4} \; - \; 4\gamma^2}$$

The maximum value of the amplitude of the movable section 10 is given by an intersection point of an equation representing amplitude and a stability judging equation, so the intersection point is a point satisfying Mathematical Formulas 16 and 17 at the same time, and may be zero in the root of Mathematical Formula 16. Thereby, Mathematical Formula 18 can be obtained. It is apparent from Mathematical Formula 18 that when the excitation force at the maximum amplitude is equal to or smaller than the attenuation amount of the electrostatic actuator, the electrostatic actuator is not activated. Therefore, it is necessary to activate the electrostatic actuator by the external force Fx satisfying Mathematical Formula 19.

## Mathematical Formula 17

$$\sigma \; = \; a_e \; + \; \frac{3}{4} \; \alpha_3 a^2$$

## Mathematical Formula 18

$$a_e \; = \; 4\gamma$$

## Mathematical Formula 19

$$a_e \; > \; 4\gamma$$

Now, the excitation force (the external force Fx) of the electrostatic actuator will be considered below. In the electrostatic actuator, the external force Fx in an X-axis direction applied to the movable section 10 is given by a change in a potential energy U relative to the swing angle $\theta$ of the movable section 10, so the external force Fx is represented by Mathematical Formula 20. In the formula, C represents capacitance.

## Mathematical Formula 20

$$F_x = \frac{dU}{d\theta} = \frac{1}{2}\frac{dc}{d\theta}v^2$$

It is apparent from Mathematical Formula 20 that the external force Fx is given by a differentiation of the capacitance C. When Mathematical Formula 20 is changed using Mathematical Formula 21, Mathematical Formula 22 is obtained.

## Mathematical Formula 21

$$S = \frac{1}{2}(r_2{}^2 - r_1{}^2)\theta$$

## Mathematical Formula 22

$$F = \frac{v^2}{2}\frac{\partial c}{\partial\theta} = N\frac{v^2}{2}\frac{\partial \text{Cunit}}{\partial\theta}$$

$$= N\frac{v^2}{2}\frac{1}{2}\varepsilon_0\frac{(r_2{}^2 - r_1{}^2)}{d} = \frac{1}{4}Nv^2\varepsilon_0\frac{(r_2{}^2 - r_1{}^2)}{d}$$

When a change in the capacitance C of an actual electrostatic actuator is observed, as shown in FIG. 5(A) to (C), around the origin point, the capacitance C is reduced roughly linearly according to the swing angle θ. Therefore, it is found out that the external force Fx with a uniform magnitude is generated around the origin point irrespective of the swing angle θ. The origin point and its vicinity will be described later.
Actually, a model given by the product of the displacement x and the external force Fx in Mathematical Formula 7 is only dependent on the sign of the displacement x in a range described in the model. To resolve the contradiction, the excitation force $a_e$ divided by the steady amplitude a may be substituted into the excitation force $a_e$ in Mathematical Formula 16. In other words, the frequency σ of the movable section 10 is given by Mathematical Formula 23.

## Mathematical Formula 23

$$\sigma = \frac{3}{4}\alpha_3 a^2 + \frac{a_e}{a} - \sqrt{\frac{1}{4}\left(\frac{a_e}{a}\right)^2 - 4\gamma^2}$$

The maximum amplitude a is given by substituting $a_e/a$ into $a_e$ in Mathematical Formula 18, that is, Mathematical Formula 24.

## Mathematical Formula 24

$$a = \frac{a_e}{4\gamma}$$

In other words, at first, the movable section 10 is actuated in a mode in which when the amplitude is increased, an effective excitation force is gradually reduced. However, it is apparent from the formula of substituting $a_e/a$ into the excitation force $a_e$ that when the steady amplitude a is increased, the value of the excitation force $a_e$ is gradually reduced so as to reduce fluctuations. Therefore, the mode of the movable section 10 is asymptotic to a mode in which the movable section 10 is actuated by a uniform excitation force.

Now, a behavior at an amplitude of zero and near zero (the origin point and its vicinity) will be described below. Referring back to Mathematical Formula 22, when the amplitude is zero and near zero, the capacitance C is not changed, so the external force Fx in an X-axis direction seems not to be generated.

On the other hand, there is an attractive force working between electric charges charged between two electrodes (the swinging electrodes 50 and the fixed electrodes 40) in the electrostatic actuator (refer to Mathematical Formula 25).

## Mathematical Formula 25

$$F_z = \frac{dU}{dy} = \frac{1}{2} \frac{dc}{dy} \, v^2 = \frac{\varepsilon \, s}{2} \left( \frac{v}{d} \right)^2$$

The force is generated even in the case where the capacitance C is not changed, and the force is oriented in a direction (a Z-axis direction in FIG. 3) orthogonal to the moving direction (an X-axis direction) of the actuator. Therefore, in the case where the swing angle $\theta$ is slightly generated, a force of $Fz \times \sin \theta = Fz \times \theta$ is generated in the X-axis direction. Moreover, when a voltage applied to the electrostatic actuator is changed, the force in the X-axis direction can be modulated. The force can be described by Mathematical Formula 7, and as described above, its solution represents a parametric excitation type behavior given by Mathematical Formula 16. When an external force Fz is large, the frequency $\sigma$ at which the movable section 10 is activated is increased accordingly.

The behaviors of movable sections in actuation devices according to an example and a plurality of comparative examples will be described below with the above-described obtained formulas.

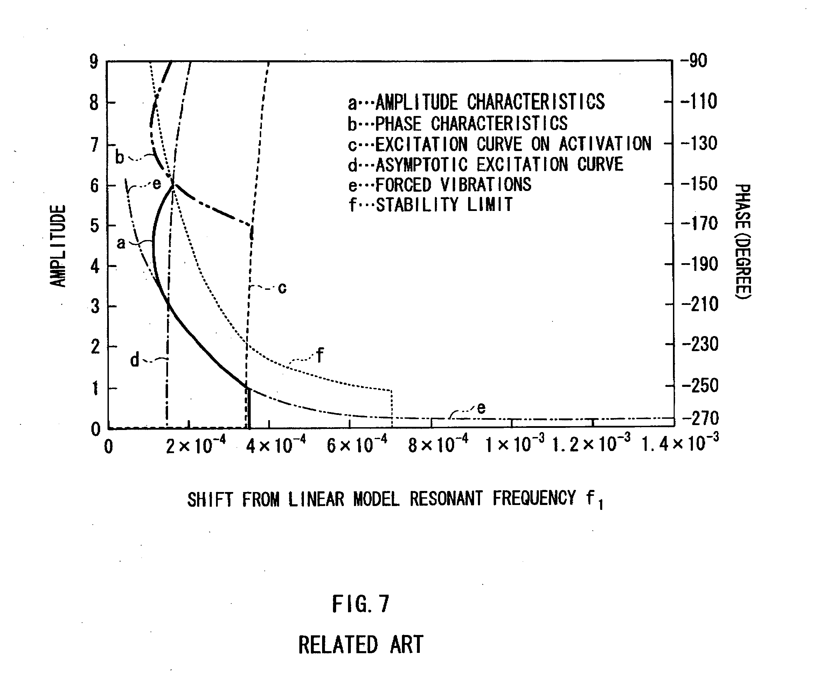

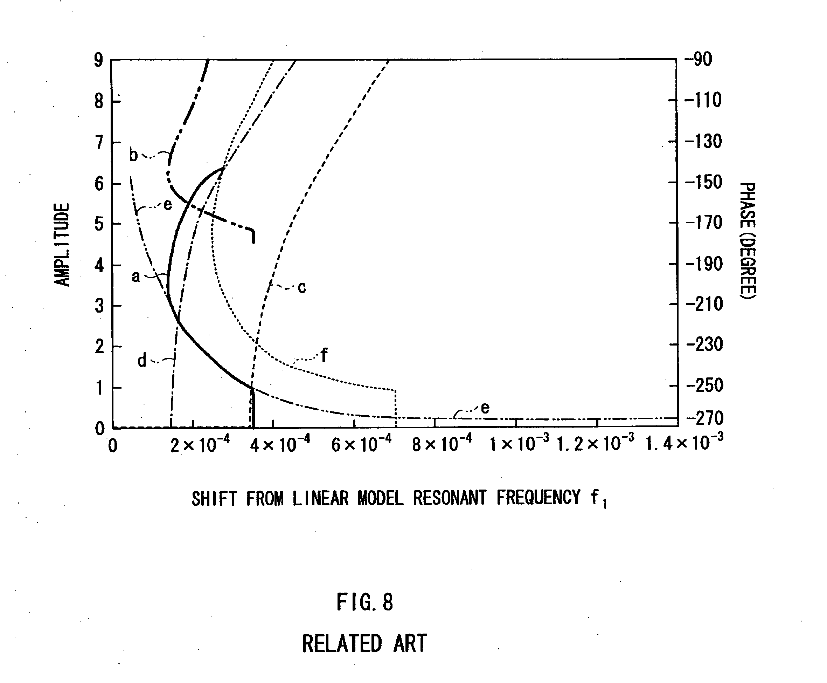

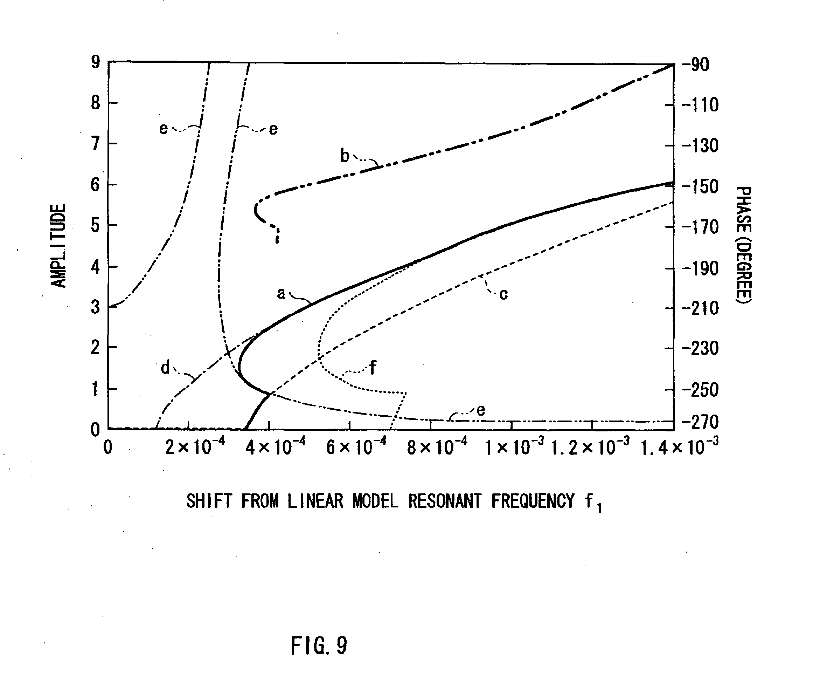

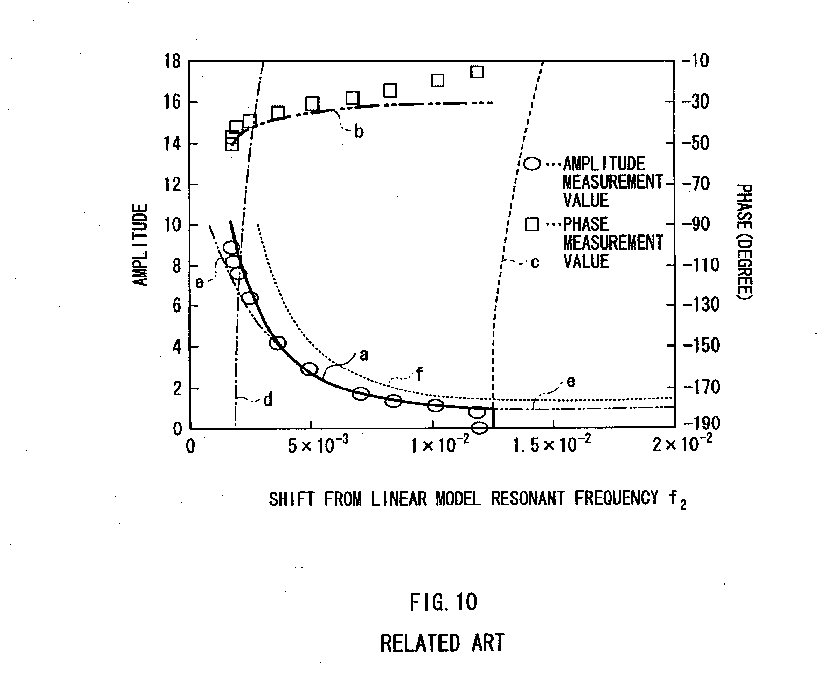

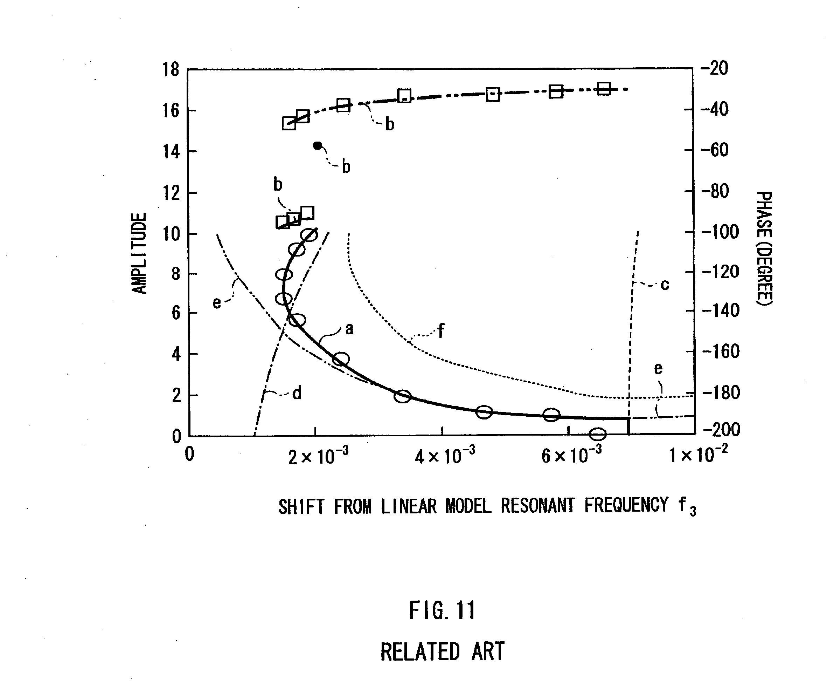

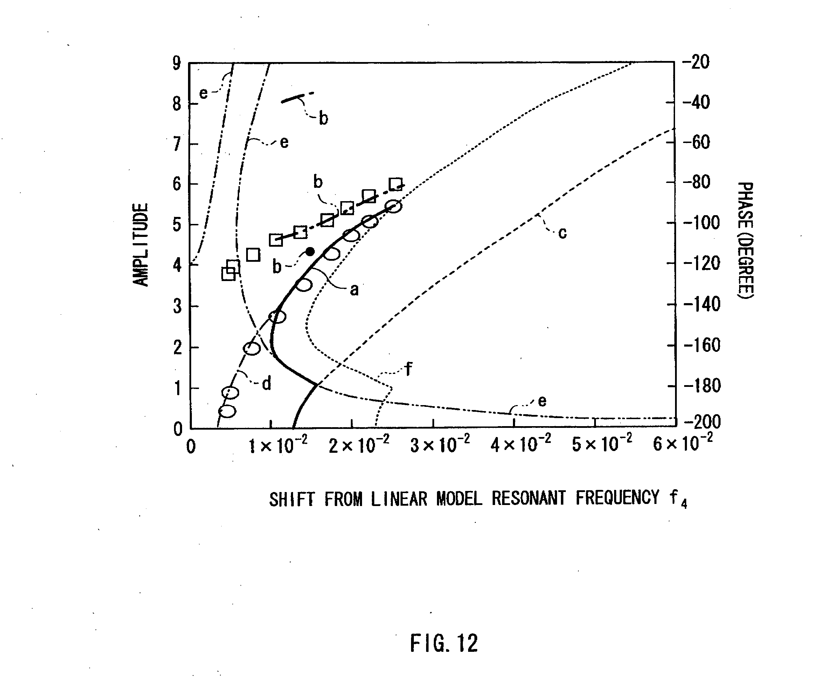

FIGs. 7 to 12 show results obtained by calculating the behaviors of the movable sections by the formulas obtained above and measurement results obtained by experiments. FIGs. 7 and 10 show the results of a first comparative example in which the movable section is swingably supported by a pair of beam sections having a third spring constant $\alpha_3$ smaller than $a_e/500$ and having linearity, FIGs. 8 and 11 show results of a second comparative example in which the movable section is swingably supported by a pair of beam sections having a third spring constant $\alpha_3$ ranging from $a_e/500$ to $a_e/50$ both inclusive and having rough linearity, and FIGs. 9 and 12 show results of the embodiment in which the movable section 10 is swingably supported by a pair of beam sections 20 having a third spring constant $\alpha_3$ larger than $a_e/50$ and having nonlinearity.

The horizontal axis of each of FIGs. 7 to 12 indicates shifts from a resonant frequency $f_1$, $f_2$, $f_3$ or $f_4$ of the movable section in the actuation device in which the movable section is swingably supported by a pair of beam sections having a third spring constant $\alpha_3$ smaller than $a_e/500$ and having linearity, and the vertical axis of each of Figs. 7 to 12 indicates the amplitude (normalized value) of the movable section. Moreover, a group of lines including a solid line, a broken line, a dashed-dotted line, a dashed-two dotted line in FIGs. 7 to 12 indicate simulation results, and a group of points with an oval shape and a square shape in FIGs. 10 to 12 indicate experimental results. In FIGs. 7 to 12, a (indicated by a heavy line) indicates amplitude characteristics, b (indicated by a heavy dashed-two dotted line) indicates phase characteristics, c (indicated by a thin broken line) indicates an excitation curve on activation, d (indicated by a thin dashed-dotted line) indicates an asymptotic excitation curve, e (indicated by a thin dashed-two dotted line) forced vibrations, f (indicated by a thin broken line) indicates a stability limit, a point with a oval shape indicates a amplitude measurement value, and a point with a square shape indicates a phase measurement value.

It is apparent from FIGs. 7 to 9 that irrespective of whether the third spring constant $\alpha_3$ is a value within any of the ranges, after parametric excitation using an electrostatic force F1 generated in a direction (a YZ plane direction in FIG. 2) parallel to a plane including the swinging electrodes 50 and the fixed electrodes 40 as an excitation force is generated (a part where a and c intersect), forced vibrations using a uniform electrostatic force $F_2$ as an excitation force is generated (a part where a and e intersect), then parametric excitation using an electrostatic force F2 as an excitation force at a capacitance which is reduced according to an increase in the swing angle $\theta$ is generated (a part not intersecting any line of the line a).

However, in FIGs. 7 and 8 (the comparative examples), the movable section is actuated in a sweep down mode, so the actuation range is extremely narrow, and is a frequency band lower than an activation frequency. On the other hand, in FIG. 9 (the example), the movable section 10 is actuated in a sweep up mode, so the actuation range is extremely wide, and most of the actuation range is a frequency band higher than the activation frequency.

Moreover, it is apparent from FIGs. 10 to 12 that the experimental results are roughly in accordance with the simulation results. In FIG. 12 (the example), it is found out that the activation frequency in the experiment is lower than that in the simulation, and the amplitude characteristics of the movable section 10 in the experiment trace the asymptotic excitation curve d. It is because as described above, the first two swings in a series of swings until reaching the maximum amplitude is actually degenerated, and when an AC voltage is applied to the electrostatic actuator, the movable section 10 is activated by the parametric excitation when reaching the maximum amplitude.

In FIG. 9, when the amplitude takes a maximum value in the actuation range, a phase difference is approximately 90 degrees. At first, the movable section 10 is actuated in an open loop, and when a feedback turns on at the time of reaching a parametric excitation zone at the maximum of the amplitude (a part not intersecting any line of the line a), closed loop control is possible. However, as shown in FIG. 12, the first two swings in a series of swings until reaching the maximum amplitude is actually degenerated, and a range capable of activating the movable section 10 falls into the parametric excitation zone, so when a frequency at which the movable section 10 can be actuated is selected as an initial value, and the movable section 10 is activated by the closed loop control, the movable section 10 can be actuated.

Although the present invention is described referring to the embodiment, the invention is not limited to the above-described embodiment, and can be variously modified.

For example, in the above-described embodiment, the specific configuration of the actuation device is described; however, the configuration of the actuation device is not limited to the above-described embodiment. For example, in the above-described embodiment, the swinging electrodes 50 are formed on long sides of the movable section 10 (both sides of each of two beam sections 20); however, the swinging electrodes 50 may be formed on short sides of the movable section 10. Moreover, the swinging electrodes 50 may be directly connected to the beam sections 20.

Moreover, in the above-described embodiment, the swinging electrodes 50 and the fixed electrodes 40 each have a comb shape extending in a direction orthogonal to the extending direction of the beam sections 20; however, they may have a comb shape extending in a direction parallel to the extending direction of the beam sections 20.

Further, in the above-described embodiment, it is described that the actuation device according to the embodiment of the invention can be applied to an image display or a scanner; however, the invention is widely applicable to any other electronic devices such as, for example, a micro bar code reader, a beam scanner, a laser printer, an optical switch, a projector, a beam scanner for laser show, a display, a two-dimensional bar code reader, a distance sensor, a laser sonar, a confocal microscope, a laser microscope, a stereo lithography prototyping system, a laser beam machine, a PtoP (peer-to-peer) optical communication system or an optical communication system.

It should be understood by those skilled in the art that various modifications, combinations, sub-combinations and alterations may occur depending on design requirements and other factors insofar as they are within the scope of the appended claims or the equivalents thereof.

**Claims**

1. An actuation device comprising:

   a movable section arranged so as to be swingable about a shaft;
   a pair of beam sections arranged on the shaft, and connected to both sides of the movable section, respectively;
   a swinging electrode connected at least one of the movable section and the beam sections; and
   a fixed electrode arranged so as to be positioned in the same plane as the swinging electrode when the movable section is in a neutral position, wherein each of the beam sections satisfies the following formula:

$$\alpha_3 > a_e/50$$

   where $\alpha_3$ represents the third spring constant of the beam section, and $a_e$ represents a maximum value of an excitation force generated in the swinging electrode when a capacitance between the swinging electrode and the fixed electrode is changed according to the swing angle of the movable section.

2. The actuation device according to claim 1, wherein each of the beam sections satisfies the following formula:

$$a_5 \leqq 2\alpha_3$$

where $a_5$ represents the fifth spring constant of the beam section.

3. The actuation device according to claim 1, wherein
each of the beam sections satisfies the following formula:

$$W/D \leqq 1.3$$

where W represents the width of the beam section, and D represents the thickness of the beam section.

4. The actuation device according to claim 1, comprising:

an actuation means for electrostatically actuating the movable section by applying a predetermined voltage between the swinging electrode and the fixed electrode.

5. The actuation device according to claim 4, wherein
the actuation means activates the movable section by applying an AC voltage having a frequency equal and close to twice the resonant frequency of the movable section determined by the inertia of the movable section and the spring constants of the beam sections.

6. The actuation device according to claim 4, wherein
the actuation means performs closed loop control in a parametric excitation mode at the maximum of an amplitude.

7. The actuation device according to claim 1, wherein
the swinging electrode and the fixed electrode engage each other, and the swinging electrode and the fixed electrode each include a plurality of comb tooth-shaped electrodes extending in a direction orthogonal to the extending direction of the beam sections.

8. The actuation device according to claim 1, wherein
the swinging electrode and the fixed electrode engage each other, and the swinging electrode and the fixed electrode each include a plurality of comb tooth-shaped electrodes extending in a direction parallel to the extending direction of the beam sections.

FIG. 1

FIG. 2

FIG. 3

FIG. 4

(A)

C (PF)

TIME (ms)

(B)

θ (DEGREE)

0

TIME (ms)

(C)

F₂ (N)

0

TIME (ms)

FIG. 5

FIG. 6

FIG. 7

RELATED ART

FIG. 8

RELATED ART

EP 1 918 244 A1

FIG. 9

FIG. 10

RELATED ART

EP 1 918 244 A1

FIG. 11

RELATED ART

FIG. 12

European Patent Office

## EUROPEAN SEARCH REPORT

Application Number

EP 07 02 0526

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 526 399 A (SAMSUNG ELECTRONICS CO LTD [KR]) 27 April 2005 (2005-04-27) * paragraphs [0014] - [0035]; figures 1-5 * | 1-8 | INV. B81B3/00 G02B26/08 |
| A | US 2005/219677 A1 (KRYLOV SLAVA [IL] ET AL) 6 October 2005 (2005-10-06) * the whole document * | 1-8 | |
| | | | TECHNICAL FIELDS SEARCHED (IPC) |
| | | | B81B G02B |

The present search report has been drawn up for all claims

| Place of search | Date of completion of the search | Examiner |
|---|---|---|
| Munich | 12 February 2008 | Rödig, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 02 0526

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2008

| Patent document cited in search report | | Publication date | Patent family member(s) | | Publication date |
|---|---|---|---|---|---|
| EP 1526399 | A | 27-04-2005 | JP | 4012535 B2 | 21-11-2007 |
| | | | JP | 2005128551 A | 19-05-2005 |
| | | | KR | 20050039232 A | 29-04-2005 |
| | | | US | 2007236767 A1 | 11-10-2007 |
| | | | US | 2005088720 A1 | 28-04-2005 |
| US 2005219677 | A1 | 06-10-2005 | US | 2005036196 A1 | 17-02-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006299980 A
- JP 2005308820 A
- JP 2005173159 A